# EUROPÄISCHE PATENTSCHRIFT

(11) **EP 0 680 571 B1**
(45) Veröffentlichungstag und Bekanntmachung des Hinweises auf die Patenterteilung: **03.12.1997**
(21) Anmeldenummer: 94905101.5
(22) Anmeldetag: 21.01.1994
(51) Int. Cl.: F16D 65/12

(54) **BREMSSCHEIBE**
BRAKE DISK
DISQUE DE FREIN

(30) Priorität: 28.01.1993 DE 4302328; 28.09.1993 DE 4332951
(43) Veröffentlichungstag der Anmeldung: 08.11.1995
(73) Patentinhaber: Schwäbische Hüttenwerke Gesellschaft mit beschränkter Haftung, D-73414 Aalen (DE)
(72) Erfinder: SCHWARZ, Guenther, D-78532 Tuttlingen (DE); SCHMITT, Ulrich, D-73453 Abtsgmünd (DE); HIPP, Armin, D-78600 Kolbingen (DE)
(74) Vertreter: Lorenz, Werner, Dipl.-Ing.
(86) Internationale Anmeldenummer: EP9400154
(87) Internationale Veröffentlichungsnummer: WO9417316

(56) Entgegenhaltungen:
- EP-A- 0 198 217
- EP-A- 0 403 799
- DE-A- 3 436 729
- FR-A- 1 360 397
- GB-A- 1 032 923
- GB-A- 1 131 208

## Beschreibung

Die Erfindung betrifft eine Bremsscheibe nach der in den Oberbegriffen der Ansprüche 1 und 2 näher definierten Art.

Bekannt ist es, eine Bremsscheibe aus zwei Teilen herzustellen, wobei im allgemeinen der Reibring aus Grauguß besteht und als Tragteil für den Reibring ein Topf aus Stahl oder Aluminium vorgesehen ist. Reibring und Topf sind z.B. durch Schrauben miteinander verbunden, wobei die Verbindung bei einer belüfteten Bremsscheibe über eine Reibringhälfte erfolgt.

Nachteilig bei einer derartigen Bremsscheibe ist jedoch, daß es zu Korrosionsproblemen zwischen Grauguß und Stahl oder Leichtmetall kommt, insbesondere bei einem direkten Kontakt über Schrauben und in Verbindung mit Salzwasser, z.B. im Winter.

Nachteilig ist weiterhin auch, daß es zu Verspannungen und sogar zu Rissen kommen kann, aufgrund unterschiedlicher Temperaturausdehnungen zwischen dem Reibring und dem Topf. Durch die einseitige Befestigung zwischen dem Reibring und dem Topf kann es zu einem sogenannten Schirmen, d.h. zu einem Verwerfen des Reibringes kommen. Der Reibring erfährt nämlich im Betrieb bei hohen Temperaturen Dimensionsänderungen, die im Millimeterbereich liegen können.

Aus der DE 34 36 729 Al ist bereits eine Bremsscheibe bekannt, die zweiteilig ist mit einem Reibring und einem mit dem Reibring verbundenen Tragteil. Die Verbindung zwischen Reibring und Tragteil erfolgt über Bolzen bzw. Stifte, die einerseits in Bohrungen in der Umfangswand des Reibringes sitzen und andererseits radial aus der Umfangswand des Tragteiles ragen. Auf diese Weise soll sich der thermisch beanspruchte Bremsring unabhängig von der Nabe ausdehnen können und eine Wärmeübertragung auf die Nabe weitgehend unterbunden werden.

Der vorliegenden Erfindung liegt die Aufgabe zugrunde, eine Bremsscheibe der eingangs erwähnten Art zu schaffen, die die Nachteile des Standes der Technik vermeidet, und die insbesondere ein besseres und problemloseres Dehnen des Reibringes bei hohen Temperaturen, bei Bedarf sogar im Millimeterbereich, ermöglicht.

Erfindungsgemäß wird nach einer ersten Möglichkeit diese Aufgabe dadurch gelöst, daß die Stifte gegenüber den Bohrungen verschiebbar sind, und daß das Tragteil die Radfelge des Fahrzeugs ist.

Anstelle einer einseitigen Verbindung zwischen Reibring und dem Tragteil, z.B. einem Topf, kann über die Stifte, Bolzen oder dergleichen eine zentrale Verbindung in der axialen Symmetrieebene des Reibringes erfolgen, wodurch z.B. ein Schirmen des Reibringes im Fahrbetrieb vermieden wird.

Einer der wesentlichen Vorteile der erfindungsgemäßen Bremsscheibe liegt darin, daß sich der Reibring bei den im Betrieb auftretenden hohen Temperaturen weitgehend problemlos dehnen kann.

Weiterhin ist von Vorteil, daß durch das Vorsehen der Radfelge als Tragteil und der Stiftverbindung gleichzeitig nur ein verhältnismäßig geringer Betrag der entstandenen Wärmeenergie zur Fahrzeugachse übertragen wird, während der größte Teil in der Bremsscheibe verbleibt und diese sich hierbei ausdehnt.

Da die Radfelge ein relativ großes Bauteil mit großflächiger Ausdehnung darstellt, wird die auf die Radfelge übertragene Wärmeenergie wiederum zum größten Teil an die Umgebungsluft abgegeben bzw. es kann nur ein relativ geringer Anteil an Wärmeenergie überhaupt zur Radnabe, auf welcher die Radfelge angeordnet ist, gelangen, so daß insgesamt nur ein sehr geringer Betrag der beim Bremsvorgang enstehenden Wärmeenergie von der Bremsscheibe zur Fahrzeugachse übertragen wird.

Des weiteren wird auch die Montage der erfindungsgemäßen Bremsscheibe durch die Verwendung der Radfelge als Tragteil wesentlich vereinfacht, da vom Stand der Technik bekannte Verbindungsringe zum Aufnehmen von Bolzen, Stiften und dergleichen entfallen.

Eine weitere erfindungsgemäße Möglichkeit mit den selben Vorteilen wie die oben beschriebene Ausführungsform kann sich dadurch ergeben, daß die Stifte gegenüber den Bohrungen verschiebbar sind, und daß das Tragteil die Radnabe des Fahrzeugs ist.

Durch die Zwischenschaltung von Stiften, die z.B. aus hochwertigem, z.B. rostfreiem, Stahl bestehen können, können auch Korrosionsprobleme vermieden werden.

Ohne ein Auftreten von Spannungen oder Verwerfungen kann sich der Reibring dabei im Betrieb im Millimeterbereich dehnen.

Hierzu wird man im allgemeinen ein entsprechend geringes Spiel zwischen den Umfangswänden der Bohrungen und den Stiften vorsehen, wobei gleichzeitig die Tiefe der Bohrungen um einige Millimeter tiefer sein kann als die Länge der Stifte in dem Bereich, in dem sie in die Bohrungen ragen.

Die Ausbildung von tieferen Bohrungen ist jedoch nicht in jedem Falle erforderlich, weil sich der Reibring im allgemeinen nach außen stärker dehnen wird. Durch die erfindungsgemäße Ausgestaltung der Bremsscheibe läßt sich auch eine Gewichtsreduzierung erzielen. Dies kann z.B. durch den Einsatz von Leichtmetall oder Kunststoff am Topf als Tragteil und eine entsprechende Materialeinsparung durch die Art der Verbindung zwischen dem Topf und dem Reibring über die Stifte erfolgen.

Praktisch wird durch die erfindungsgemäße Verbindung bzw. Lagerung des Reibringes gegenüber dem Tragteil eine Beweglichkeit zwischen Tragteil und Reibring relativ zueinander möglich, wobei der Reibring "schwimmend" gelagert ist, denn er kann sich bei erhöhten Temperaturen problemlos dehnen. Trotzdem ist eine mittige Aufhängung des Reibringes jederzeit gewährleistet.

Durch die erfindungsgemäße Verbindung des Reibringes über die Stifte mit dem Tragteil werden auch Teilungsfehler, wie sie bei einer Verbindung über Schrauben zwangsweise gemäß Stand der Technik auftreten, vermieden. Durch die erfindungsgemäße Ausgestaltung läßt sich eine exakte und maßgenaue Verbindung schaffen.

Bei einer Ausgestaltung des Topfes aus Stahl wird man die Stifte auf einfache Weise fest mit dem Topf verbinden. Dies kann z.B. durch ein Aufschweißen auf den äußeren Umfangsring des Topfes erfolgen.

Selbstverständlich ist jedoch auch eine Verbindung durch Kleben möglich.

Die Stifte können aus einem hochwertigen Stahl, insbesondere aus einem rostfreien Stahl, bestehen.

Bei einer Ausgestaltung der erfindungsgemäßen Bremsscheibe als belüftete Bremsscheibe, wobei die beiden Reibringteile durch Stege miteinander verbunden sind, wird man in die Stege die Bohrungen einbringen.

Eine vorteilhafte Ausgestaltung kann dabei darin bestehen, daß die Bohrungen in jede zweite Rippe eingebracht sind, die entsprechend mit einer Verdickung versehen ist.

Bei einer derartigen Ausgestaltung ergibt sich eine beidseitige Durchströmung des Reibringes und damit eine bessere Kühlwirkung, die von der Stiftbefestigung bzw. Stiftaufhängung noch unterstützt wird, da dadurch ein besserer Lufteintritt gewährleistet wird.

Nachfolgend sind drei Ausführungsbeispiele der Erfindung anhand der Zeichnung prinzipmäßig dargestellt.

Es zeigt:
- Fig. 1:: einen Schnitt nach der Linie I-I der Fig. 2;
- Fig. 2:: eine Ansicht der Bremsscheibe nach der Fig. 1 aus Pfeilrichtung A;
- Fig. 3:: eine andere Ausgestaltung einer Bremsscheibe im Schnitt nach der Linie IV-IV der Fig. 4;
- Fig. 4:: eine Ansicht aus Richtung B der Fig. 3;
- Fig. 5:: einen Schnitt ähnlich den Schnitten gemäß den Fig. 1 und 3 für eine Bremsscheibe anderer Ausgestaltung;
- Fig. 6:: einen Schnitt durch eine Radnabe mit einer erfindungsgemäßen Bremsscheibe;
- Fig. 7:: eine Draufsicht auf eine Klemmpratze;
- Fig. 8:: eine Vorderansicht einer Klemmpratze.

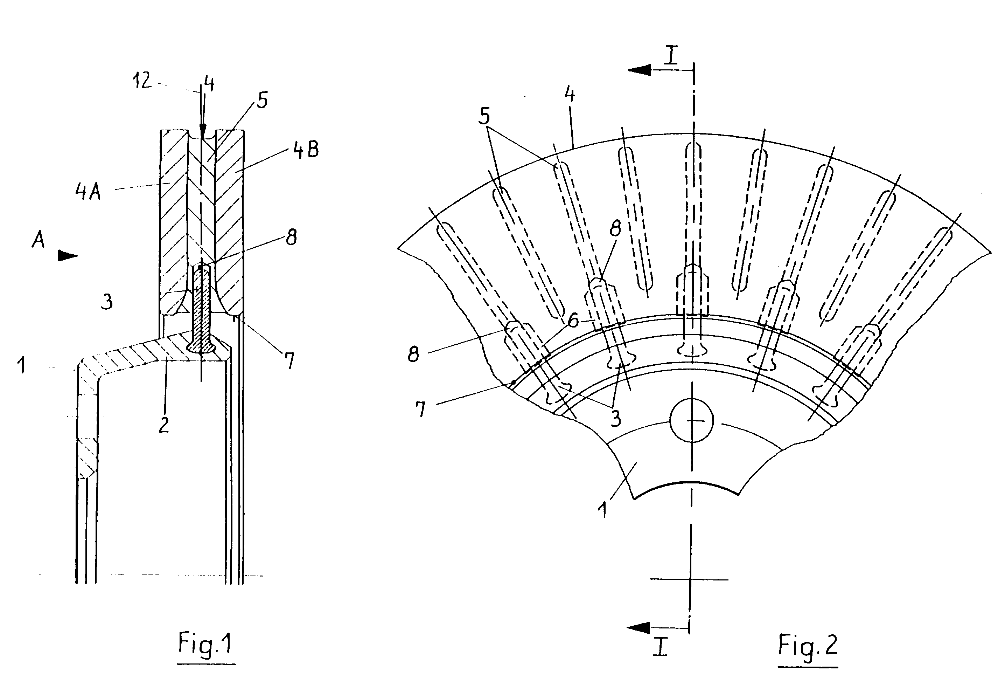

Gemäß Ausgestaltung einer Bremsscheibe nach den Fig. 1 und 2 weist diese einen Topf 1 auf, der in bekannter Weise auf einer Nabe eines Rades (nicht dargestellt) befestigt ist. Über eine Vielzahl von in die Umfangswand 2 des Topfes eingeformten Verbindungsglieder in Form von Stiften 3 erfolgt eine Verbindung mit einem Reibring 4, der aus zwei Reibringhälften 4A und 4B besteht, welche durch eine Vielzahl von über den Umfang verteilten und in radialer Richtung verlaufenden Stegen 5 miteinander verbunden sind. Auf diese Weise ergibt sich eine belüftete Bremsscheibe.

Jeder zweite Steg 5 ist im inneren Umfangsbereich mit einer Verdickung 6 versehen. In die Verdickungen 6 ist von der inneren Umfangswand 7 des Reibringes 4 her jeweils eine Bohrung 8 eingebracht. In die Bohrungen 8, die sich in der Mittellängsachse 12 des Reibringes 4 befinden, ragen die Stifte 3, wobei die Längen der Stifte 3 so gewählt sind, daß die Tiefen der Bohrungen 8 um wenige Millimeter, z.B. 1 bis 3 mm, tiefer sind. Die Durchmesserverhältnisse zwischen den Bohrungen 8 und denen der Stifte 3 sind so gewählt, daß die Stifte 3 sich mit geringem Spiel in den Bohrungen 8 verschieben lassen.

Wie ersichtlich, ist auf diese Weise der Reibring 4 "schwimmend" auf dem Topf 1 gelagert und bei einer entsprechenden Temperaturerhöhung kann sich der Reibring 4 aufgrund der Überlänge bzw. der größeren Tiefe der Bohrungen 8 ohne die Gefahr von Verspannungen in radialer Richtung dehnen. Der Topf 1 kann aus Aluminium bestehen, wobei für eine formschlüssige Verbindung zwischen den Stiften 3 und dem Topf 1 die Stifte 3 bei der Herstellung in den Topf 1 mit eingegossen werden.

Statt einer Ausgestaltung des Topfes aus Aluminium kann dieser im Bedarfsfalle auch aus Stahl oder Gußeisen, z.B. Grauguß, bestehen, wobei auch in diesem Falle aufgrund einer Materialeinsparung eine Gewichtsreduzierung erzielt wird.

Grundsätzlich kann der Topf gegossen, geschmiedet, fließgepreßt, tiefgezogen oder auf jede beliebige andere Weise hergestellt sein.

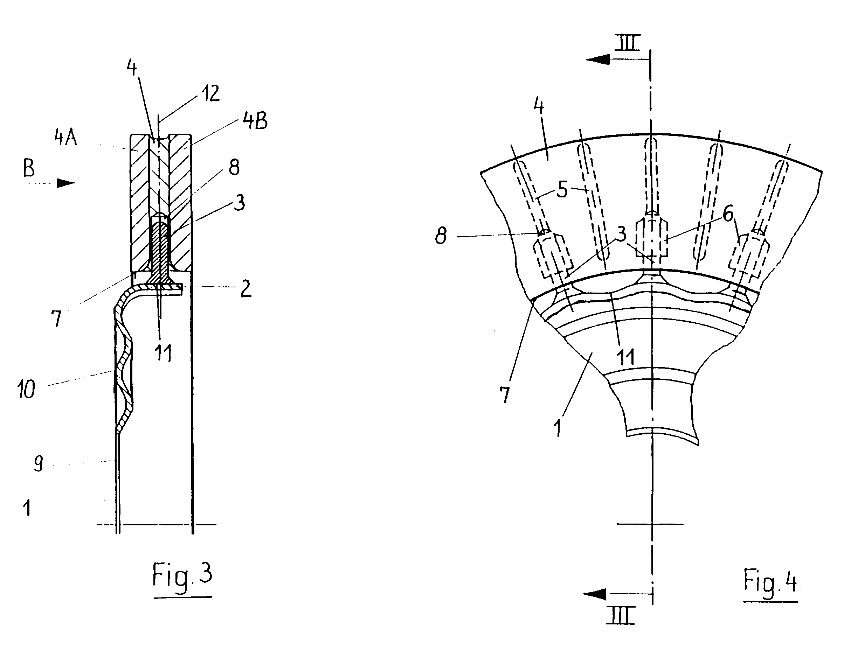

In den Fig. 3 und 4 ist eine Ausgestaltung der Bremsscheibe dargestellt, wobei z.B. der Topf 1 sehr dünnwandig aus Stahl hergestellt sein kann. Um die erforderliche Stabilität bzw. Festigkeit zu erreichen, kann der Topf 1 dabei in seinem radialen Teil mit wellenförmigen Sicken 10 versehen sein. Zur Erhöhung der Stabilität bzw. Festigkeit kann der Umfangsbereich 11 des Topfes 1 ebenfalls mit wellenförmigen Sicken versehen sein (siehe Fig. 4).

Wie aus den Fig. 3 und 4 weiterhin ersichtlich ist, sind in diesem Falle die Stifte 3 durch Verschweißen oder Verkleben mit dem Umfangsbereich 11 des Topfes 1 verbunden. Die übrige Ausgestaltung der Bremsscheibe entspricht der in den Fig. 1 und 2 beschriebenen Ausgestaltung.

Die vorstehend beschriebene Bremsscheibe ist insbesondere für einen Einsatz einer Scheibenbremse bei einem Fahrzeug geeignet. Grundsätzlich ist sie jedoch auch für ähnliche Einsatzfälle verwendbar, wo eine Verbindung mit einem Innenkörper und einem diesen umgebenden Ringkörper vorhanden ist, wobei der Ringkörper hochtemperaturbelastet ist und sich entsprechend dehnen können soll.

Im allgemeinen sind Scheibenbremsen für Fahrzeuge so ausgebildet, daß die Bremsscheiben am äußeren Umfang von den Bremsbacken bzw. Bremszange umfaßt werden, wie es in den Fig. 1 bis 4 dargestellt ist.

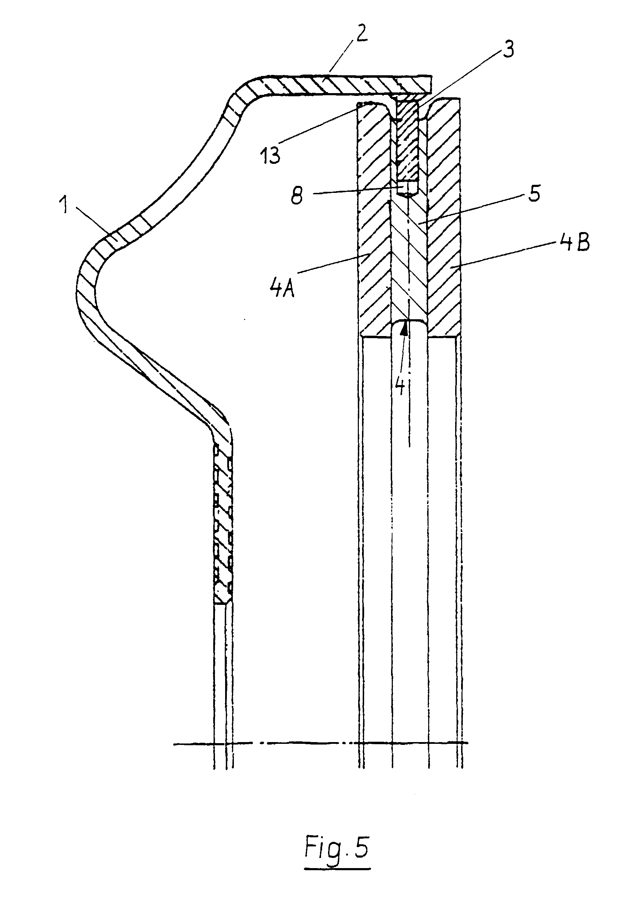

In dem Ausführungsbeispiel nach der Fig. 5 ist eine Ausgestaltung einer Bremsscheibe dargestellt, wobei der Topf in Form eines Bremsscheibenträgers den Reibring außenseitig umfaßt und wobei Bremsbacken bzw. Bremszange vom inneren Umfang des Bremsringes aus diesen umfassen. Eine Bremsscheibenvorrichtung dieser Art ist z.B. in der europäischen Patentschrift 0 241 767 beschrieben. Statt einer Verbindung des Topfes bzw. des Bremsscheibenträgers mit dem Reibring bzw. Bremsring über krallenartige Stege, wobei diese Verbindung sehr aufwendig und damit kostspielig ist, sind nunmehr Stifte 3 hierzu vorgesehen. Die Stifte 3 sind dabei in Bohrungen 8, die von der äußeren Umfangswand 13 des Reibringes aus in die Stege 5 eingebracht sind, eingeschoben. Die Verbindung mit dem Topf 1 erfolgt dabei z.B. ebenfalls durch ein Verschweißen. Auch in diesem Falle ist eine Relativbewegung zwischen den Stiften 3 und dem Reibring 4 möglich, so daß sich dieser frei dehnen kann.

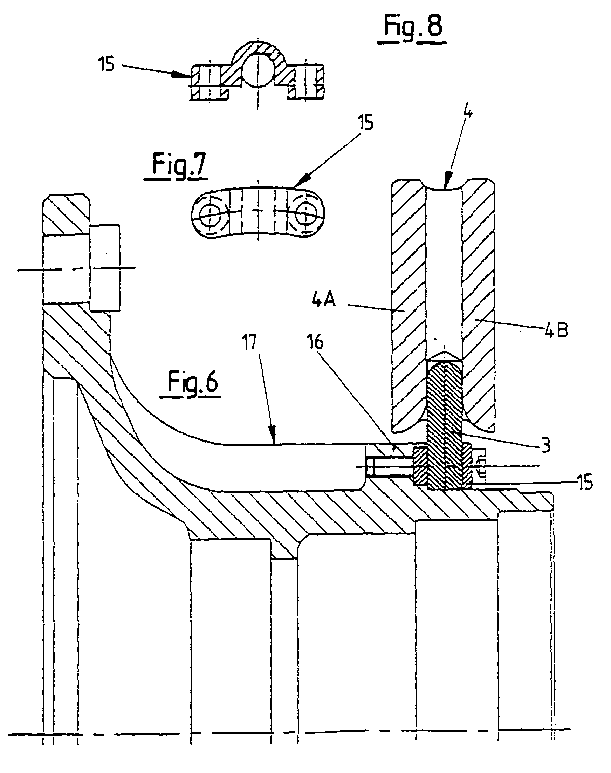

In einem dritten Ausführungsbeispiel kann auch eine Radnabe 17 eines Fahrzeuges als Tragteil 1 ausgebildet sein (siehe Fig. 6). Hierbei erfolgt die Befestigung der Stifte 3 auf der Radnabe 17 mittels Klemmpratzen 15, deren genaue Geometrie in den Fig. 7 und 8 dargestellt ist. Die Klemmpratzen 15 werden an einem auf der Radnabe 17 umlaufenden Steg 16, der eine Erweiterung der Radnabe 17 in radialer Richtung darstellt, verschraubt, wodurch die Stifte 3 zwischen dem Steg 16 und den Klemmpratzen 15 festgeklemmt werden.

Vorteilhaft ist bei diesem Ausführungsbeispiel, daß die beim Bremsvorgang entstandene Wärmeenergie nicht zum Großteil zur Fahrzeugachse übertragen wird, sondern aufgrund der Stiftverbindung, über die die gesamte Wärmeübertragung von der Bremsscheibe zur Radnabe erfolgen muß, nur ein verhältnismäßig geringer Betrag der entstandenen Wärmeenergie an die Radnabe abgeleitet wird, während der größte Teil in der Bremsscheibe verbleibt und diese sich hierdurch ausdehnt.

Anstatt, wie beschrieben, mit der Radnabe, kann die Bremsscheibe auch mit der Radfelge direkt verbunden werden. Bei einer Befestigung an der Radfelge wäre eine Verbindung ähnlich der in Fig. 5 beschriebenen möglich, d.h. der Reibring wird außenseitig umfaßt und Bremsbacken bzw. Bremszangen umfassen vom inneren Umfang des Bremsringes aus den Bremsscheibenträger.

Sowohl bei der Verbindung mit der Radnabe als auch mit der Radfelge ist eine Relativbewegung zwischen den Stiften 3 und dem Reibring 4 und somit auch eine freie Dehnung des letzteren möglich.

## Patentansprüche

1. Bremsscheibe, insbesondere belüftete Bremsscheibe, für eine Bremse in einem Fahrzeug, mit einem Reibring (4) und einem mit dem Reibring (4) verbundenen Tragteil (1,17), wobei mehrere über den Umfang des Tragteiles (1,17) verteilt angeordnete und mit dem Tragteil (1,17) verbundene Verbindungsglieder in Form von Stiften, Bolzen (3) oder dergleichen in Aussparungen (8) in eine Umfangswand (7) des Reibringes (4) ragen, die radial aus der Umfangswand des Tragteiles (1,17) ragen und in Bohrungen (8) in der Umfangswand (7) des Reibringes (4), die sich in der axialen Symmetrieebene des Reibringes befinden, eingesteckt sind,
**dadurch gekennzeichnet**, daß
die Stifte (3) gegenüber den Bohrungen (8) verschiebbar sind, und daß das Tragteil (1,17) die Radfelge des Fahrzeuges ist.

2. Bremsscheibe, insbesondere belüftete Bremsscheibe, für eine Bremse in einem Fahrzeug, mit einem Reibring (4) und einem mit dem Reibring (4) verbundenen Tragteil (1,17), wobei mehrere über den Umfang des Tragteiles (1,17) verteilt angeordnete und mit dem Tragteil (1,17) verbundene Verbindungsglieder in Form von Stiften, Bolzen (3) oder dergleichen in Aussparungen (8) in eine Umfangswand (7) des Reibringes (4) ragen, die radial aus der Umfangswand des Tragteiles (1,17) ragen und in Bohrungen (8) in der Umfangswand (7) des Reibringes (4), die sich in der axialen Symmetrieebene des Reibringes befinden, eingesteckt sind,
**dadurch gekennzeichnet**, daß
die Stifte (3) gegenüber den Bohrungen (8) verschiebbar sind, und daß das Tragteil die Radnabe (17) des Fahrzeuges ist.

3. Bremsscheibe nach Anspruch 1 oder 2,
**dadurch gekennzeichnet**, daß
die Stifte (3) mit geringem Spiel in den Bohrungen (8) angeordnet sind.

4. Bremsscheibe nach einem der Ansprüche 1 bis 3,
**dadurch gekennzeichnet**, daß
die Bohrungen (8) in dem Reibring (4) tiefer sind als die Längen der in die Bohrungen ragenden Stifte (3).

5. Bremsscheibe nach einem der Ansprüche 1 bis 4,
**dadurch gekennzeichnet**, daß
die Stifte (3) auf dem Tragteil (1,17) durch Schweißen befestigt sind.

6. Bremsscheibe nach Anspruch 2,
**dadurch gekennzeichnet**, daß
die Stifte (3) über Klemmpratzen (15) mit der Radnabe (17) verbunden sind.

7. Bremsscheibe nach Anspruch 6,
**dadurch gekennzeichnet**, daß
die Stifte (3) zwischen Klemmpratzen (15) und Rippen oder radialen Ansätzen (16) positioniert sind.

8. Bremsscheibe nach einem der Ansprüche 1 bis 7, in einer Ausbildung als belüftete Bremsscheibe, wobei die zwei Reibringhälften (4A,4B) durch Stege (5) miteinander verbunden sind,
**dadurch gekennzeichnet**, daß
in den Stegen (5) die Bohrungen (8) für die Stifte (3) von der inneren Umfangswand (7) her eingebracht sind.

9. Bremsscheibe nach Anspruch 8,
**dadurch gekennzeichnet**, daß
jeder zweite Steg (5) mit einer Verdickung (6) versehen ist, in die die Bohrung (8) für jeweils einen Stift (3) eingebracht ist.

10. Bremsscheibe nach einem der Ansprüche 1 bis 9,
**dadurch gekennzeichnet**, daß
die Bohrungen (8) in der inneren Umfangswand des Reibringes (4) angeordnet sind.

11. Bremsscheibe nach einem der Ansprüche 1 bis 9,
**dadurch gekennzeichnet**, daß
bei einer Bremsscheibe, bei der das Tragteil (1,17) den Reibring (4) außenseitig umfaßt, die Bohrungen (8) in der äußeren Umfangswand (13) des Reibringes (4) angebracht sind.

## Claims

1. Brake disc, in particular ventilated brake disc, for a brake in a vehicle, comprising a friction ring (4) and a supporting part (1, 17) connected to the friction ring (4), a plurality of connecting elements in the form of pins, bolts (3) or the like distributed over the circumference of the supporting part (1, 17) and connected to the supporting part (1, 17) projecting into recesses (8) in a circumferential wall (7) of the friction ring (4), projecting radially from the circumferential wall of the supporting part (1, 17) and being inserted into bores (8) in the circumferential wall (7) of the friction ring (4) situated in the axial plane of symmetry of the friction ring, characterised in that the pins (3) can be displaced relative to the bores (8) and that the supporting part (1, 17) is the wheel rim of the vehicle.

2. Brake disc, in particular ventilated brake disc, for a brake in a vehicle, comprising a friction ring (4) and a supporting part (1, 17) connected to the friction ring (4), a plurality of connecting elements in the form of pins, bolts (3) or the like distributed over the circumference of the supporting part (1, 17) and connected to the supporting part (1, 17) projecting into recesses (8) in a circumferential wall (7) of the friction ring (4), projecting radially from the circumferential wall of the supporting part (1, 17) and being inserted into bores (8) in the circumferential wall (7) of the friction ring (4) situated in the axial plane of symmetry of the friction ring, characterised in that the pins (3) can be displaced relative to the bores (8) and that the supporting part is the wheel hub (17) of the vehicle.

3. Brake disc according to claim 1 or claim 2, characterised in that the pins (3) are arranged in the bores (8) with little play.

4. Brake disc according to one of claims 1 to 3, characterised in that the bores (8) in the friction ring (4) are deeper than the lengths of the pins (3) projecting into the bores.

5. Brake disc according to one of claims 1 to 4, characterised in that the pins (3) are secured on the supporting part (1, 17) by welding.

6. Brake disc according to claim 2, characterised in that the pins (3) are connected to the wheel hub (17) by means of clamping jaws (15).

7. Brake disc according to claim 6, characterised in that the pins (3) are positioned between clamping jaws (15) and ribs or radial shoulders (16).

8. Brake disc according to one of claims 1 to 7, in the form of a ventilated brake disc, the two friction ring halves (4A, 4B) being connected together by means of webs (5), characterised in that the bores (8) for the pins (3) are introduced into the webs (5) from the inner circumferential wall (7).

9. Brake disc according to claim 8, characterised in that every second web (5) is provided with a thickened portion (6) into which the bores (8) for the respective pins (3) are introduced.

10. Brake disc according to one of claims 1 to 9, characterised in that the bores (8) are arranged in the inner circumferential wall of the friction ring (4).

11. Brake disc according to one of claims 1 to 9, characterised in that, in the case of a brake disc in which the friction ring (4) is provided on the outer surface of the supporting part (1, 17), the bores (8) are arranged in the outer circumferential wall (13) of the friction ring (4).

## Revendications

1. Disque de frein, en particulier disque de frein ventilé pour frein d'un véhicule à moteur, comportant une bague de friction (4) et un élément de support (1, 17) lié à la bague de friction (4), plusieurs éléments de liaison, sous forme de goupilles, boulons (3) ou similaires, engagés dans des évidements (8) d'une paroi périphérique (7) de la bague de friction (4), ces éléments de liaison étant répartis régulièrement et liés à l'élément de support (1, 17) s'étendant radialement hors de la paroi périphérique de l'élément de support (1, 17) et s'engageant dans des alésages (8) de la paroi périphérique (7) de la bague de friction (4), qui sont disposés dans le plan de symétrie axiale de cette bague de friction, **caractérisé en ce que** les goupilles (3) sont mobiles axialement par rapport aux alésages (8), et en ce que l'élément de support (1, 17) est la jante de la roue du véhicule.

2. Disque de frein, en particulier disque de frein ventilé pour frein d'un véhicule à moteur, comportant une bague de friction (4) et un élément de support (1, 17) lié à la bague de friction (4), plusieurs éléments de liaison, sous forme de goupilles, boulons (3) ou similaires, engagés dans des évidements (8) d'une paroi périphérique (7) de la bague de friction (4), ces éléments de liaison étant répartis régulièrement et liés à l'élément de support (1, 17) s'étendant radialement hors de la paroi périphérique de l'élément de support (1, 17) et s'engageant dans des alésages (8) de la paroi périphérique (7) de la bague de friction (4), qui sont disposés dans le plan de symétrie axiale de cette bague de friction, **caractérisé en ce que** les goupilles (3) sont mobiles axialement par rapport aux alésages (8), et en ce que l'élément de support (17) est le moyeu de la roue du véhicule.

3. Disque de frein selon la revendication 1 ou 2, **caractérisé en ce que** les goupilles (3) sont logées dans les alésages (8) avec un faible jeu.

4. Disque de frein selon l'une des revendications 1 à 3, **caractérisé en ce que** la profondeur des alésages (8) à l'intérieur de la bague de friction (4) est supérieure à la longueur des goupilles (3) engagées dans ces alésages.

5. Disque de frein selon l'une des revendications 1 à 4, **caractérisé en ce que** les goupilles (3) sont fixées à l'élément de support (1, 17) par soudure.

6. Disque de frein selon la revendication 2, **caractérisé en ce que** les goupilles (3) sont fixées au moyeu de la roue (17) au moyen de brides de clipsage (15).

7. Disque de frein selon la revendication 6, **caractérisé en ce que** les goupilles (3) sont positionnées entre des brides de clipsage (15) et des nervures ou des protubérances radiales (16).

8. Disque de frein selon l'une des revendications 1 à 7, dans une réalisation de disque de frein ventilé, dans lequel deux moitiés de bague de friction (4A, 4B) sont couplées entre elles par des nervures (5), **caractérisé en ce que** les nervures (5) comportent les alésages (8) pour les goupilles (3) de la paroi périphérique intérieure (7).

9. Disque de frein selon la revendication 8, **caractérisé en ce que** chaque deuxième nervure (5) est équipée d'un renflement (6) dans lequel est ménagé l'alésage (8) pour la goupille (3) correspondante.

10. Disque de frein selon l'une des revendications 1 à 9, **caractérisé en ce que** les alésages (8) sont ménagés dans la paroi périphérique intérieure de la bague de friction (4).

11. Disque de frein selon l'une des revendications 1 à 9, **caractérisé en ce que**, pour un disque de frein sur lequel l'élément de support (1, 17) entoure la bague de friction (4) de l'extérieur, les alésages (8) sont ménagés dans la paroi périphérique extérieure (13) de la bague de friction (4).
